(19) **Europäisches Patentamt / European Patent Office / Office européen des brevets**

(11) **EP 1 305 540 B1**

(12) **EUROPEAN PATENT SPECIFICATION**

(45) Date of publication and mention
of the grant of the patent:
**14.03.2007 Bulletin 2007/11**

(51) Int Cl.:
**F16H 7/00** (2006.01)

(21) Application number: **01957370.8**

(22) Date of filing: **31.07.2001**

(86) International application number:
**PCT/US2001/024096**

(87) International publication number:
**WO 2002/010614 (07.02.2002 Gazette 2002/06)**

(54) **TENSIONING IDLER**

SPANNROLLE

GALET TENDEUR

(84) Designated Contracting States:
**AT BE CH CY DE DK ES FI FR GB GR IE IT LI LU MC NL PT SE TR**

(30) Priority: **01.08.2000 US 222084 P**

(43) Date of publication of application:
**02.05.2003 Bulletin 2003/18**

(73) Proprietor: **The Gates Corporation Denver, CO 80202 (US)**

(72) Inventor: **SERKH, Alexander Troy, MI 48098-4696 (US)**

(74) Representative: **James, Anthony Christopher W.P. et al Carpmaels & Ransford 43-45 Bloomsbury Square London WC1A 2RA (GB)**

(56) References cited:
**EP-A- 0 097 065       EP-A- 0 478 267
WO-A-99/28652**

**Description**

Field of the Invention

The invention relates to tensioning idlers, more particularly to tensioning idlers having linear motion and having damping created by linear bearings and an arcuate damping member.

Background of the Invention

Most engines used for automobiles and the like include a number of belt driven accessory systems which are necessary for the proper operation of the engine. The accessory systems may include an alternator, air conditioner compressor and a power steering pump.

The accessory systems are generally mounted on a front surface of the engine. Each accessory having a pulley mounted on a shaft for receiving power from some form of belt drive. In early systems, each accessory was driven by a dedicated belt that ran between the accessory and the crankshaft. With improvements in belt technology, single serpentine belts are now used in most applications, routed among the various accessory components. The serpentine belt is driven by the engine crankshaft.

Since the serpentine belt must be routed to all accessories, it has generally become longer than its predecessors. To operate properly, the belt is installed with a pre-determined tension. As it operates, it stretches slightly. This results in a decrease in belt tension, which may cause the belt to slip, causing undue noise and wear. Consequently, a belt tensioner is desirable to maintain the proper belt tension as the belt stretches during use.

As a belt tensioner operates, the belt usually oscillates due to its interaction with the pulleys. These oscillations are undesirable, as they cause premature wear of the belt and tensioner. Therefore, a damping mechanism is added to the tensioner to damp the belt oscillations.

Various prior art damping mechanisms have been developed. They include viscous fluid based dampers, mechanisms based on frictional surfaces sliding or interaction with each other, and dampers using a series of interacting springs. Each relies on a single form of damping mechanism to perform the damping function. Each has a pulley and damping mechanism configuration with the damping mechanism external to the pulley. This created an unduly large device for the purpose.

The size problem was solved by incorporating the damping and tensioning mechanism within the diameter of the pulley, thereby diminishing its overall size.

Representative of the art is U.S. patent no. 5,045,029 (1991) to Dec which discloses a pulley mounted on a pivot arm biased with a compression spring. A damping means operates against a pivot arm to damp oscillations of the pivot arm. The components are generally contained within an annular space in the pulley. See also U.S. patent no. 5,073,148 (1991) to Dec and U.S. patent no. 5,370,585 (1994) to Thomey and U.S. patent no. 4,696,663 (1987) to Thomey.

The prior art tensioners are complex and comprise many components. Each of the prior art tensioners constrains the pulley to move in an arc as it operates, requiring clearance space. The prior art pivot configuration limits the available operating movement range of the tensioner. Further, a single damping mechanism is used which further limits the ability of the tensioner to damp impulses exceeding a given energy.

WO99/28652 describes a rotary belt tensioner with hydraulic damping. The belt tensioner is for use in an engine and comprises a fixed structure attached to the engine and a moveable structure biased in a belt-tensioning direction. One of the fixed and movable structures defines a fluid chamber containing an incompressible fluid, while the other defines a chamber dividing structure within the fluid chamber. The fluid dividing structure defines two chamber portions and is constructed such that movement of the moveable structure displaces fluid from one chamber portion to the other. The chamber dividing structure is also configured so as to allow the fluid to flow between chamber portions in a restricted manner so as yieldingly to resist the relative movement of the moveable structure. The fluid flow restriction is less when the moveable structure moves in the belt tensioning direction than when the moveable structure moves in the opposite direction.

Summary of the Invention

The primary aspect of the invention is to provide a tensioner having a pulley housing that moves linearly.

Another aspect of the invention is to provide a tensioner having linear bearings that impart damping in response to linear movement of a pulley.

Another aspect of the invention is to provide a tensioner having damping created by the action of a band engaged with an arcuate housing surface.

Another aspect of the invention is to provide a tensioner having all required components packaged within a pulley diameter.

Another aspect of the invention is to provide a tensioner having all required components packaged within a pulley annular space.

The invention provides a tensioning idler comprising:

a base having a stop;
a housing having a housing surface;
a mechanical engagement between the housing and base, whereby the housing is substantially constrained to move on a predetermined path;
a damping member having a portion for engaging the stop, the damping member having a damping surface in sliding contact with the housing surface;
a biasing member with an end connected to the damping member and an other end connected to the housing; and

whereby when acted upon by a force the housing moves along the predetermined path pressing the damping member portion against the stop, the biasing member then resisting avh further movement of the housing, the damping surface in contact with the housing surface damping a housing movement.

Brief Description of the Drawings

The accompanying drawings, which are incorporated in and form a part of the specification, illustrate preferred embodiments of the present invention, and together with a description, serve to explain the principles of the invention.

Fig. 1 is a side cross-sectional view of the invention at line B-B in Fig. 2.
Fig. 2 is a partial cross-sectional plan view of the invention.
Fig. 3 is a free body diagram of the linear bearing.
Fig. 4 is a detail of the guide and rail.
Fig. 5 is a partial cross-sectional plan view of an alternate embodiment.
Fig. 6 is a cross-sectional elevation view of the pivot point in Fig. 5.

Detailed Description of the Preferred Embodiment

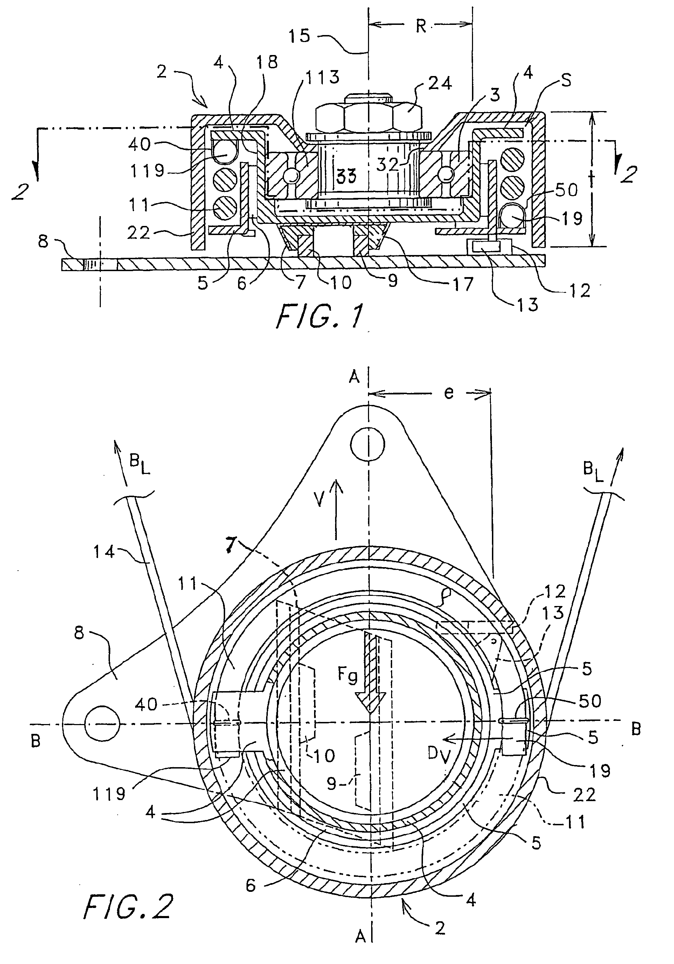

Fig. 1 is a side cross-sectional view of the invention at line B-B in Fig. 2. The inventive tensioner comprises pulley 2 journaled to housing 4 with bearing 3. Bearing 3 is pressed into housing 4 in the preferred embodiment, but may be mechanically connected by any suitable means known in the art. Pulley 2 and housing 4 may comprise the idler pulley disclosed in U.S. application 09/525,607 filed 3/14/00. As disclosed in 09/525,607, flange 32 of pulley 2 bears upon an inner race 113 of bearing 3. Axle 33 and nut 24 affix pulley 2 to the inner race of bearing 3.

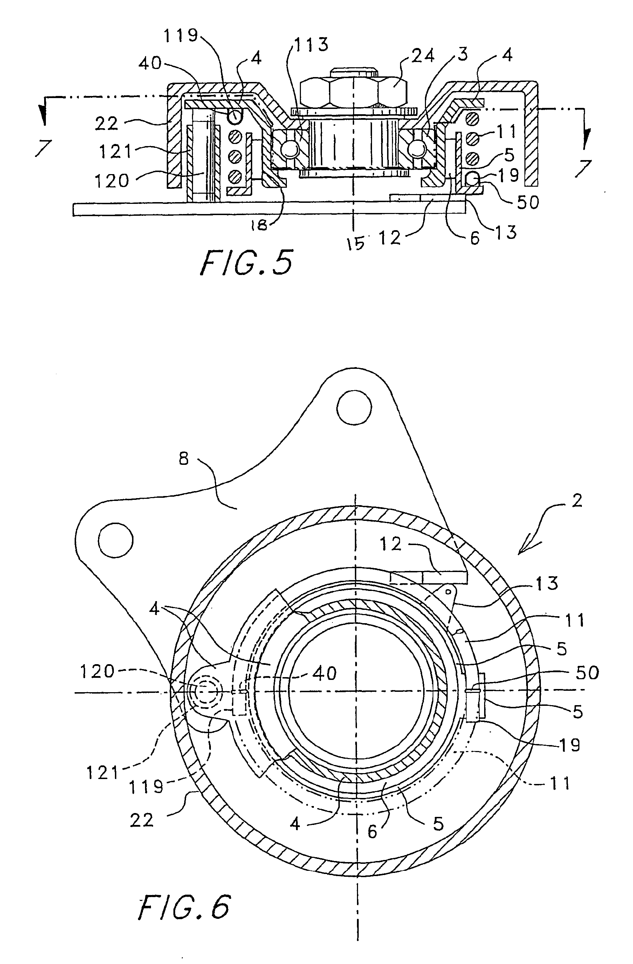

Bearing member or guide 7 is mounted to a lower surface of housing 4. Guide 7 has sides 17 that are inclined to housing 4 at an acute angle, creating a "C" like shape, see Fig. 4. Bearing members or rails 9, 10 are mounted to the base 8. Sides 17 of guide 7 are slidingly engaged with and cooperate with inclined sides of rails 9, 10. Guide 7 and rails 9, 10 constrain housing 4 to move substantially linearly as described in Fig. 2. One can appreciate that guide 7 and cooperating rails 9, 10 comprise a linear bearing. Although rails 9, 10 are shown as separate pieces, they may also be combined to form a single part, so long as the edges of the part slidingly engage with guide 7 in substantially the same manner as rails 9, 10.

Biasing member or spring 11 resists a force or belt load, $B_L$. Spring 11 encircles damping mechanism support 5. In the preferred embodiment spring 11 is a torsion spring. End 19 of spring 11 is affixed to support 5 with clip 50, see Fig. 2. Frictional material 6 is affixed to an inner surface of support 5, between support 5 and housing 4. Frictional material 6 may comprise any known in the motion damping arts, including but not limited to Nylon 6/6 or Nylon 4/6 with internal lubricant.

Frictional material 6, in turn, circumfrentially engages an outer surface 18 of housing 4. Support 5, frictional material 6 and outer surface 18 of housing 4 are substantially co-axial about pulley axis 15. End 13 of support 5 engages with and bears upon stop or tab 12 on base 8. End 119 of spring 11 is attached to housing 4 with clip 40. It can be readily seen that spring 11, support 5 and frictional material 6 are compactly contained within a pulley annular space, S, as well as within a thickness, t, of the pulley. This configuration results in the tensioner occupying the smallest possible space; defined only by the diameter and thickness of the pulley, while affording an enhanced range of motion as well as damping impulses of greater magnitude than prior art dampers.

Fig. 2 is a partial cross-sectional plan view of the invention. Support 5 and frictional material 6 have a substantially circular form that is substantially coaxial with the axis of rotation of the pulley 2.

Rails 9, 10 are shown offset from each other with respect to an axis B-B. The rails 9, 10 are also radially eccentrically offset from the axis of rotation 15 of the pulley. Guide 7 comprises a single piece that engages each of the rails 9, 10. Spring 11, support 5 and frictional material 6 are shown contained within an outer annular surface 22 of pulley 2. In operation, guide 7 and therefore housing 4 moves parallel to axis A-A in the positive and negative directions.

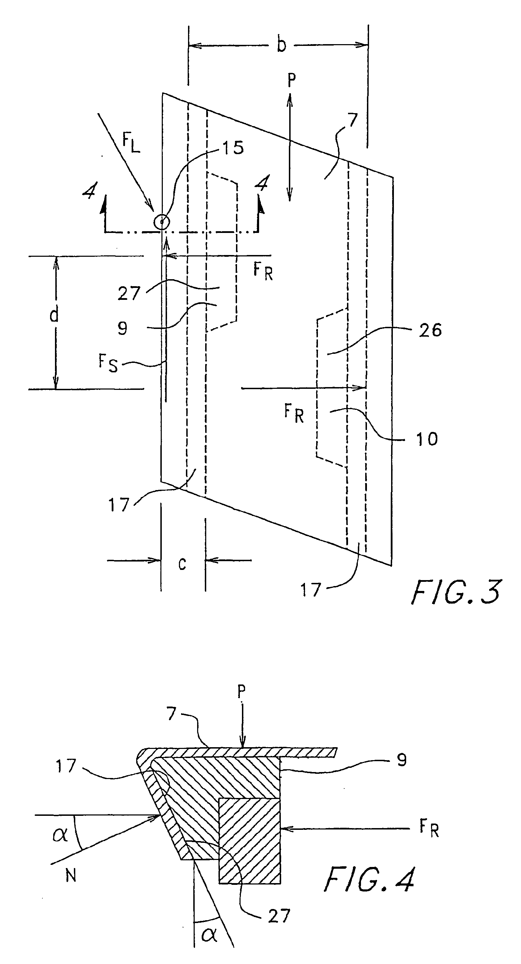

Fig. 3 is a free body diagram of the linear bearing.

In operation, a belt 14 imparts a belt load or force on pulley 2 as shown in Fig. 2, identified as $\mathbf{F_L}$. $\mathbf{F_L}$ causes housing 4 to move along axis A-A thereby causing end 13 of support 5 to press against stop or tab 12. This motion causes end 19 of spring 11 to move as to 'wind' the spring about the housing, see Fig. 2. Movement of the housing 4 in direction V will also cause end 19 to move in direction $D_v$ as end 19 tightens about surface 18. This is because surface 18 is pressed into damping or frictional material 6 and support 5 by $\mathbf{F_L}$. Consequently, movement of support 5 in direction V pulls end 19 in direction $D_v$. It is known in the art that turning a torsion spring in a direction to wind the spring or close the coils will cause the spring to resist such load or movement, assuming the other end of the spring is fixed. An increased force will result in an increase in the spring force resisting such force as a function of the spring rate. For a given number of coils in a torsion spring, the amount of spring torque, $T_{spr}$, generated by the movement of the housing 4 is a function of the lever arm distance "e" from axis A-A to the point of contact of the end 13 on tab 12.

Further movement of the pulley, and thereby housing 4, in direction V will cause end 19 to further move in direction $D_v$, further tightening support 5 about surface 18. Therefore, one skilled in the art can appreciate that load or force $\mathbf{F_L}$ causes frictional material 6 to bear upon or to be pressed against the housing surface 18. As described above, as $\mathbf{F_L}$ increases, the support 5 and frictional material 6 are progressively wrapped about the surface 18. Further, an increase in force and angular wrap results in an increase in the frictional force resisting movement of the housing 4 and thereby movement of pulley 2. This damps a movement of the housing and thereby of the pulley.

The inventive tensioner also comprises a further damping mechanism. In operation, as described above, a belt under a tension or load is trained about pulley 2 which creates a hubload force $\mathbf{F_L}$, which in turn operates on pulley axle 15 and thereby on housing 4. A spring force vector $\mathbf{F_s}$ also operates on support 5 to resist movement of housing 4. $\mathbf{F_s}$ is shown as a single vector for ease of description, although one can appreciate that the force is distributed across the surface of damping band 6 and arcuate surface 18. A reaction force $\mathbf{F_R}$ in turn operates on rails 9, 10 through guide 7. Housing 4 through guide 7 is constrained to move along a fixed path P between guides 9, 10. One can readily appreciate that the arrangement of the described force vectors causes the housing to maintain proper contact between the guide 7 and rails 9, 10, thereby preventing rotation of guide 7. In the preferred embodiment, the predetermined path P for the housing is substantially linear. In an alternate embodiment, described in the following figures, the path is substantially arcuate.

Since the tensioner may be assumed to be in static equilibrium for the purposes of analysis, the various vectors may be added to give the reaction force vector $\mathbf{F_R}$ on the rails 9, 10:

$$\mathbf{F_R} = \mathbf{F_S} - \mathbf{F_L} \qquad (1)$$

$\mathbf{F_R}$ is resolved as a couple $\mathbf{F_R}^*$ acting on rails 9, 10 through guide 7. If forces $\mathbf{F_S}$, $\mathbf{F_L}$, are parallel to each other, $\mathbf{F_R}^*=0$. Then a couple $\mathbf{F_R}^*$ will be determined by spring torque and distance d; $\mathbf{F_R}^*d=T_{spr}$.

The sides of rails 9, 10 engaged with the cooperating sides 17 of guide 7 have a pre-determined frictional coefficient. Consequently, a frictional force is created at the interface by the operation of each force of couple $\mathbf{F_R}^*$ acting on each rail 9, 10. Further, since rails 9, 10 have engaging surfaces describing an acute angle $\alpha$ with respect to the housing, housing 4 also causes a camming effect as the plate surfaces engage inclined rail surfaces 26 and 27. This introduces a $\sin(\alpha)$ factor to the frictional force, assuming $\mathbf{F_R}$ comprises normal forces. The frictional force in turn determines the damping effect $\zeta$ or:

$$\zeta = f(\alpha, \mu, d, T_{spr}, R, b) \qquad (2)$$

where $\mu$ is a coefficient of friction for each cooperating sliding surface, 17, 26, and 27; b is the lever arm distance in Fig. 2; d is the distance in Fig. 3; $\alpha$ is the angle in Fig. 4; $T_{spr}$ is the spring torque; R is the radius of material in Fig. 1. The coefficient of friction may be chosen by a user based upon materials known in the damping arts, including but not limited to Nylon 6/6 or Nylon 4/6 with internal lubricant.

It can be seen that the damping effect of the tensioner is a combined result of the engagement of the frictional material 6 on surface 18, as well as the action of the couple $\mathbf{F_R}^*$ forces acting to create frictional forces through guide 7 acting on rails 9, 10.

One skilled in the art will readily appreciate that the damping effect can be changed by varying the couple $\mathbf{F_R}^*$, as well as changing the frictional coefficient of each sliding surface. This can be accomplished by changing the lateral distance "b" between the rails 9, 10, Fig. 2; the distance "c" between the rails and the pulley center; and, the longitudinal distance "d" between the rails 9, 10. Proper selection of each variable allows a user to design the tensioner to operate based on a given set of operational parameters.

Fig. 4 is a detail of a guide and rail. The included angle between the inclined side of guide 7, surface 17 and surface 27 is shown as acute angle $\alpha$. The normal force acting on rail surface 27 is N; were $\mathbf{F_R}$=Ncos$\alpha$.

Fig. 5 is a partial cross-sectional plan view of an alternate embodiment. Biasing member or spring 11 resists a force or belt load. Spring 11 encircles damping mechanism support 5. In this embodiment spring 11 is a torsion spring. End 19 of spring 11 is affixed to support 5 with clip 50. Frictional material 6 is affixed to an inner surface of support 5, between support 5 and housing 4. Frictional material 6 may comprise any known in the motion damping arts, including but not limited to Nylon 6/6 or Nylon 4/6 with internal lubricant.

Frictional material 6, in turn, circumfrentially engages an outer surface 18 of housing 4. Support 5, frictional material 6 and outer surface 18 of housing 4 are substantially co-axial about pulley axis 15. End 13 of support 5 engages with and bears upon stop or tab 12 on base 8. End 119 of spring 11 is attached to housing 4 with clip 40. It can be readily seen that spring 11, support 5 and frictional material 6 are compactly contained within a pulley annular space, S, as well as within a thickness, t, of the pulley, as shown in Fig. 1.

Pivot 120 mechanically connects housing 4 to base 8. Housing 4 pivots about pivot 120. By pivoting about pivot 120, housing 4 is constrained to move in a substantially arcuate path in response to a force, such as a belt load.

Fig. 6 is a cross-sectional elevation view of the pivot point in Fig. 5. Pivot 120 is connected to housing 4. Pivot 120 engages base 8 at receiver 121. Receiver 121 may be lubricated to facilitate movement of the pivot.

**Claims**

**1.** A tensioning idler comprising:

a base (8) having a stop (12);
a housing (4) having a housing surface (18);
a mechanical engagement (7, 9, 10, 17; 120, 121) between the housing (4) and base (8), whereby the housing (4) is substantially constrained to move on a predetermined path;
a damping member (5, 6) having a portion (13) for engaging the stop (12), the damping member having a damping surface in sliding contact with the housing surface (18);
a biasing member (11) with an end (19) connected to the damping member (5, 6) and an other end (119) connected to the housing (4); and

whereby when acted upon by a force the housing (4) moves along the predetermined path pressing the damping member portion (13) against the stop (12), the biasing member (5, 6) then resisting a further movement of the housing (4), the damping surface in contact with the housing surface (18) damping a housing movement.

**2.** The tensioning idler as in claim 1 further comprising:

a pulley (2) journaled to the housing (4), an axis of rotation (15) of the pulley (2) substantially normal to the predetermined path.

**3.** The tensioning idler as in claim 1 wherein the mechanical engagement (7, 9, 10, 17; 120, 121) further comprises:

a first bearing member (9, 10; 121) mounted to the base (8);
a second bearing member (7, 17; 120) mounted to the housing (4) in sliding engagement with the first bearing member (9, 10; 121).

**4.** The tensioning idler as in claim 3, wherein the predetermined path is substantially linear.

**5.** The tensioning idler as in claim 3, wherein the predetermined path is substantially arcuate.

**6.** The tensioning idler as in claim 1, wherein the biasing member (11) comprises a torsion spring.

**7.** The tensioning idler as in claim 1, wherein the housing surface (18) is substantially arcuate.

**8.** The tensioning idler as in claim 1, wherein the mechanical engagement (120, 121) comprises a pivot.

9. The tensioning idler as in claim 2, wherein:

the biasing member (11) and the housing (4) and the damping member (5, 6) are contained within an annular space of the pulley (2) and are further contained within a thickness of the pulley (2).

10. The tensioning idler as in claim 3 further comprising:

a pulley (2) journaled to the housing (4) such that an axis of rotation (15) of the pulley (2) is substantially normal to the predetermined path; and
an axis of rotation of the pulley (15) is eccentric to a bearing axis of symmetry.

11. The tensioning idler as in claim 8 wherein the predetermined path is arcuate.


**Patentansprüche**

1. Spannrolle mit:

einem einen Anschlag (12) aufweisenden Basisteil (8);
einem eine Gehäusefläche (18) aufweisenden Gehäuse (4);
einem mechanischen Angreifteil (7,9,10,17;120,121) zwischen dem Gehäuse (4) und dem Basisteil (18), wodurch das Gehäuse (4) im Wesentlichen auf eine Bewegung auf einem vorbestimmten Weg beschränkt ist;
einem Dämpfelement (5,6), das einen zum Angreifen an dem Anschlag (12) vorgesehenen Teil (13) aufweist, wobei das Dämpfelement eine mit der Gehäusefläche (18) in Gleitkontakt stehende Dämpffläche aufweist;
einem Vorspannelement (11), dessen eines Ende (19) mit dem Dämpfelement (5,6) verbunden ist und dessen anderes Ende (119) mit dem Gehäuse (4) verbunden ist; und

wobei sich das Gehäuse (4), wenn eine Kraft darauf einwirkt, entlang des vorbestimmten Wegs bewegt und dabei das Dämpfelementteil (13) gegen den Anschlag (12) drückt, wobei das Vorspannelement (5,6) dann einer weiteren Bewegung des Gehäuses (4) entgegenwirkt und die mit der Gehäusefläche (18) in Kontakt stehende Dämpffläche die Gehäusebewegung dämpft.

2. Spannrolle nach Anspruch 1, ferner mit:

einer an dem Gehäuse (4) gelagerten Riemenscheibe (2), wobei die Drehachse (15) der Riemenscheibe (2) im Wesentlichen senkrecht zu dem vorbestimmten Weg verläuft.

3. Spannrolle nach Anspruch 1, bei der das mechanische Angreifteil (7,9, 10,17;120,121) ferner aufweist:

ein an dem Basisteil (8) angebrachtes erstes Lagerelement (9,10;121);
ein an dem Gehäuse (4) angebrachtes und mit dem ersten Lagerelement (9,10;121) in Gleitkontakt stehendes zweites Lagerelement (7, 17;120).

4. Spannrolle nach Anspruch 3, bei der der vorbestimmte Weg im Wesentlichen linear verläuft.

5. Spannrolle nach Anspruch 3, bei der der vorbestimmte Weg im Wesentlichen bogenförmig verläuft.

6. Spannrolle nach Anspruch 1, bei der das Vorspannelement (11) eine Torsionsfeder aufweist.

7. Spannrolle nach Anspruch 1, bei der die Gehäusefläche (18) im Wesentlichen bogenförmig verläuft.

8. Spannrolle nach Anspruch 1, bei der das mechanische Angreifteil (120, 121) ein Gelenk aufweist.

9. Spannrolle nach Anspruch 2, bei der:

das Vorspannelement (11) und das Gehäuse (4) und das Dämpfelement (5,6) in einem Ringraum der Riemenscheibe (2) und ferner innerhalb der Dicke der Riemenscheibe (2) aufgenommen sind.

**10.** Spannrolle nach Anspruch 3, ferner mit:

einer derart an dem Gehäuse (4) gelagerten Riemenscheibe (2), dass die Drehachse (15) der Riemenscheibe (2) im Wesentlichen senkrecht zu dem vorbestimmten Weg verläuft; und
die Drehachse (15) der Riemenscheibe relativ zu einer Lager-Symmetrieachse exzentrisch ist.

**11.** Spannrolle nach Anspruch 8, bei der der vorbestimmte Weg bogenförmig verläuft.


**Revendications**

**1.** Galet tendeur, comprenant :

une base (8) comportant une butée (12) ;
un boîtier (4) comportant une surface (18) de boîtier ;
un engagement mécanique (7, 9, 10, 17 ; 120, 121) entre le boîtier (4) et la base (8), ce par quoi le boîtier (4) est sensiblement contraint pour se déplacer sur un trajet prédéterminé ;
un élément (5, 6) d'amortissement comportant une partie (13) destinée à engager la butée (12), l'élément d'amortissement comportant une surface d'amortissement en contact glissant avec la surface (18) de boîtier ;
un élément (11) de rappel pourvu d'une extrémité (19) liée à l'élément (5, 6) d'amortissement et d'une autre extrémité (119) liée au boîtier (4) ; et
ce par quoi, lorsqu'il subit l'action d'une force, le boîtier (4) se déplace le long du trajet prédéterminé en poussant la partie (13) d'élément d'amortissement contre la butée (12), l'élément (5, 6) de rappel résistant alors à un déplacement plus avant du boîtier (4), la surface d'amortissement en contact avec la surface (18) de boîtier amortissant un déplacement de boîtier.

**2.** Galet tendeur selon la revendication 1, comprenant en outre :

une poulie (2) tourillonnée sur le boîtier (4), un axe (15) de rotation de la poulie (2) étant sensiblement normal au trajet prédéterminé.

**3.** Galet tendeur selon la revendication 1, dans lequel l'engagement mécanique (7, 9, 10, 17 ; 120, 121) comprend en outre :

un premier élément (9, 10 ; 121) de palier monté sur la base (8) ;
un second élément (7, 17 ; 120) de palier monté sur le boîtier (4) en engagement glissant avec le premier élément (9, 10 ; 121) de palier.

**4.** Galet tendeur selon la revendication 3, dans lequel le trajet prédéterminé est sensiblement rectiligne.

**5.** Galet tendeur selon la revendication 3, dans lequel le trajet prédéterminé est sensiblement arqué.

**6.** Galet tendeur selon la revendication 1, dans lequel l'élément (11) de rappel comprend un ressort de torsion.

**7.** Galet tendeur selon la revendication 1, dans lequel la surface (18) de boîtier est sensiblement arquée.

**8.** Galet tendeur selon la revendication 1, dans lequel l'engagement mécanique (120, 121) comprend un pivot.

**9.** Galet tendeur selon la revendication 2, dans lequel :

l'élément (11) de rappel et le boîtier (4) et l'élément (5, 6) d'amortissement sont contenus à l'intérieur d'un espace annulaire de la poulie (2) et sont en outre contenus à l'intérieur d'une épaisseur de la poulie (2).

**10.** Galet tendeur selon la revendication 3, comprenant en outre :

une poulie (2) tourillonnée sur le boîtier (4) de sorte qu'un axe (15) de rotation de la poulie (2) est sensiblement normal au trajet prédéterminé ; et
qu'un axe de rotation de la poulie (15) est excentré par rapport à un axe de symétrie de palier.

**11.** Galet tendeur selon la revendication 8, dans lequel le trajet prédéterminé est arqué.

FIG. 1

FIG.2

FIG.3

FIG.4

FIG.5

FIG.6